(19) Europäisches Patentamt
European Patent Office
Office européen des brevets

(11) **EP 1 092 991 A2**

(12) **EUROPEAN PATENT APPLICATION**

(43) Date of publication:
**18.04.2001 Bulletin 2001/16**

(51) Int. Cl.[7]: **G02B 1/10**, **B32B 7/10**

(21) Application number: **00122157.1**

(22) Date of filing: **12.10.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **15.10.1999 JP 29440599**

(71) Applicant: **SONY CORPORATION**
**Tokyo (JP)**

(72) Inventors:
• **Ishikawa, Hiroichi,**
**Sony Corporation**
**Tokyo (JP)**
• **Shimoda, Kazuhito,**
**Sony Corporation**
**Tokyo (JP)**
• **Kakinuma, Masayasu,**
**Sony Corporation**
**Tokyo (JP)**
• **Kawashima, Toshitaka,**
**Sony Corporation**
**Tokyo (JP)**
• **Honjo, Yoshiharu,**
**Sony Corporation**
**Tokyo (JP)**

(74) Representative:
**MÜLLER & HOFFMANN Patentanwälte**
**Innere Wiener Strasse 17**
**81667 München (DE)**

(54) **Adhesion layer for optical coatings**

(57)    An optical component comprised of a plurality of optical thin films formed with good adhesion on a base, a manufacturing method thereof and an optical component manufacturing device are provided. A unique feature of the optical component is a plurality of layers of optical thin films formed together by way of an adhesion layer comprised of silicon on a transparent or semitransparent base.

FIG. 1

| | |
|---|---|
| SiO$_2$ | 35.0nm |
| Nb$_2$O$_5$ | 94.8nm |
| SiO$_2$ | 112.4nm |
| Nb$_2$O$_5$ | 81.7nm |
| SiO$_2$ | 134.0nm |
| Nb$_2$O$_5$ | 77.3nm |
| SiO$_2$ | 126.1nm |
| Nb$_2$O$_5$ | 78.1nm |
| SiO$_2$ | 129.1nm |
| Nb$_2$O$_5$ | 77.1nm |
| SiO$_2$ | 126.3nm |
| Nb$_2$O$_5$ | 77.3nm |
| SiO$_2$ | 128.8nm |
| Nb$_2$O$_5$ | 78.1nm |
| SiO$_2$ | 127.1nm |
| Nb$_2$O$_5$ | 78.1nm |
| SiO$_2$ | 132.0nm |
| Nb$_2$O$_5$ | 82.6nm |
| SiO$_2$ | 128.8nm |
| Nb$_2$O$_5$ | 95.9nm |
| SiO$_2$ | 151.4nm |
| Si | 2nm |
| HARD COATING | 6 $\mu$m |
| PET | 188 $\mu$m |

EP 1 092 991 A2

**Description**

BACKGROUND OF THE INVENTION

Field of the Invention

This invention relates to an optical component, a manufacturing method for optical components and an optical component manufacturing device.

Description of Related Art

In recent years, there has been a remarkable increase in the supply of optical components such as anti-reflective coatings, highly reflective mirrors, edge filters, band filters and dichroic filters, etc.
These optical components are generally film formed on a glass substrate but due to cost considerations, optical thin films having the functions of anti-reflective coatings, highly reflective mirrors, edge filters, band filters and dichroic filters, etc., are formed in a plurality of layers for instance, on a substrate of plastic film, and a portion of the optical components developed in this way are being placed on the market.
The optical components formed in this way have the problem that the more numerous the layers of optical thin film on the plastic film (substrate), the more the optical film made from the plurality of layers is prone to peel away from the plastic film (substrate).
Various test research has been performed in the related art to resolve these problems. Methods were disclosed in the related art in Japanese Patent Laid-Open Publication No. Sho 63-81402, Japanese Patent Laid-Open Publication No. Sho 63-81403 and Japanese Patent Laid-Open Publication No. Sho 63-81404 for forming cerium oxide as an adhesion layer on the plastic base, and forming an anti-reflective layer comprised of silicon oxide on the adhesion layer, to develop an anti-reflective filter having improved adhesion between the optical thin film layers and the plastic film.
However, cerium has the drawback of a high material cost and is not generally used as a sputter material.
A method was also disclosed in Japanese Patent Laid-Open Publication No. Hei 1-280701 to coat an acrylic crosslinked reinforced plastic onto a plastic film and then form a plurality of layers of optical thin films on the ultraviolet hardened plastic base to form an anti-reflective film and enhance the adhesion of the base with the optical thin films. However, this method requires a coating process so that the method is extremely difficult to use in actual production.
Further, in the technical method of the related art disclosed in Japanese Patent Laid-Open Publication No. Hei 10-48402, an adhesion layer of $SiO_2$ (O<X<2) is formed on a plastic base, and an optical thin film layers made from $SiO_2$ are formed on the adhesion layer to form an anti-reflective film. However when using an adhesion layer of $SiO_2$ (O<X<2), the X value is easily prone to fluctuate according to the film forming conditions and cannot easily be maintained at a fixed value, causing the problem that fixed optical characteristics are difficult to obtain for the manufactured optical component.

SUMMARY OF THE INVENTION

In view of the above problems with the related art, this invention has the object of providing an optical component comprised of a plurality of optical thin films formed with good adhesion on a base, a manufacturing method thereof and an optical component manufacturing device.
In order to achieve the above objective, the invention according to claim 1, is characterized in having an adhesion layer comprised of silicon on a transparent or semitransparent base, and an optical component having an optical thin film comprised of a plurality of these adhesion layers.
The structure of the invention has good adhesion between the base and the optical thin film layers since the plurality of layers of optical thin film layers are formed by means of adhesion layers comprised of silicon on a transparent or semitransparent base.
According to one aspect of the present invention, the optical component preferably has an adhesion layer with a thickness of approximately 1 nanometer to 10 nanometers.
Also, according to another aspect of the present invention, the optical component more preferably has an adhesion layer with a thickness of approximately 1 nanometer to 5 nanometers.
The adhesion layer of the above structure is thin and ample adhesion strength can also be maintained since the adhesion layer has a thickness from 1 nanometer to 5 nanometers or from 1 nanometer to 10 nanometers. There are also no effects on the optical characteristics of the optical component.
In order to further achieve the above object, the manufacturing method for an optical component according to another aspect of the present invention, has a process to form by sputtering, an adhesion layer utilizing a metal target of silicon on the base; and a process to form on the adhesion layer, an optical thin film comprised of a plurality of layers by utilizing the target of the optical thin film material.

The above manufacturing method, is comprised of a process for forming an adhesion layer by sputtering, utilizing the silicon metal target on the base and a process to form an optical thin film comprised of a plurality of layers on the adhesion layer, by utilizing the target of the optical thin film material so that the adhesion of the base with the optical thin film is extremely improved and the durability is also satisfactory.

To also achieve the above object, an optical component manufacturing device for an optical component according to another aspect of the present invention has a first holding part for holding a base, a second holding part for receiving the base sent from the first holding part, and a metal target of silicon for sputtering the base also placed between the first holding part and the second holding part.

The above structure of the optical component manufacturing device for optical components has a first holding part for holding a base, a second holding part for receiving the base sent from the first holding part, and a metal target of silicon for sputtering the base also placed between the first holding part and the second holding part so that the adhesion can be formed with the metal target of silicon on the base.

In the invention as described above, an optical component of multiple layers of optical thin film formed with good adhesion on the base, a manufacturing method and a manufacturing device for the optical component can therefore be provided.

BRIEF DESCRIPTION OF THE DRAWINGS

Fig. 1 is an overall cross sectional view showing the dichroic filter of the embodiment of this invention.
Fig. 2 is an overall cross sectional view showing the optical thin film forming device 20 of the embodiment of this invention.
Fig. 3 is a graph showing the band filter characteristics.
Fig. 4 is a drawing showing a typical structure of the band filter.
Fig. 5 is a graph showing the edge filter characteristics.
Figs. 6A and 6B are a typical structure of the edge filter.

DETAILED DESCRIPTION OF THE PREFERRED EMBODIMENTS

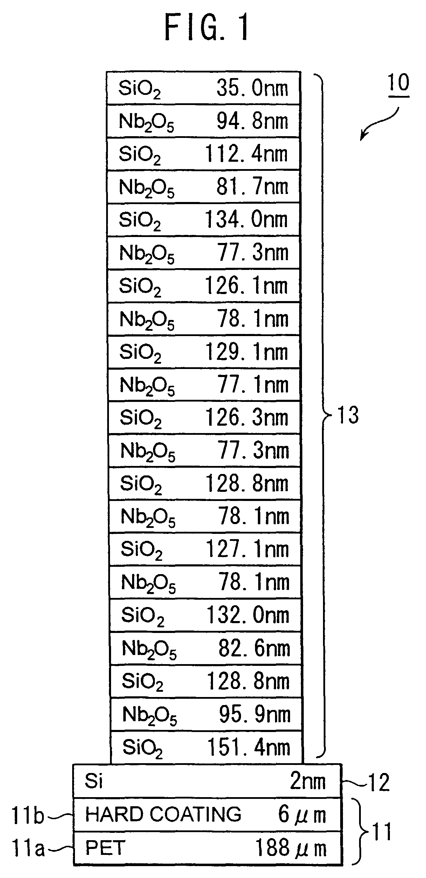

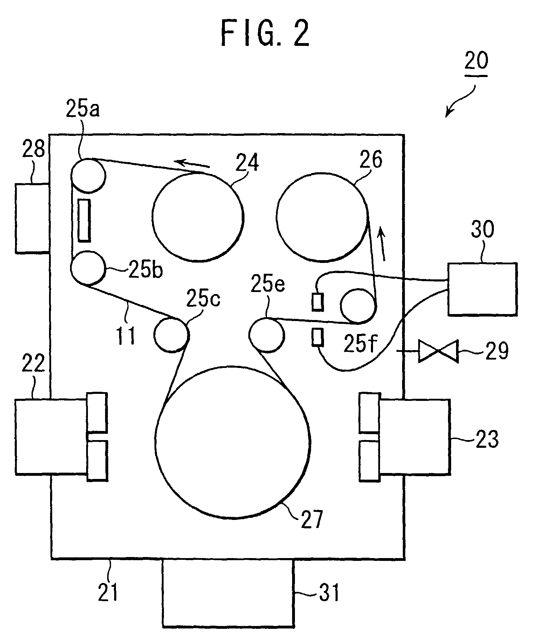

Hereafter, the preferred embodiments of this invention will be described in detail while referring to Fig. 1 and Fig. 2.

The embodiments related hereafter of course have various preferred technical limitations since these embodiments are preferred working examples of the invention, however unless particular limits are placed on the scope of the invention in the following description, then the invention is not limited by the following examples.

An optical component constituting the embodiment of this invention and having the structure for example, of a dichroic filter is shown in Fig. 1. A dichroic filter 10 as shown in Fig. 1 has first of all, a base 11. This base 11 has for instance, a plastic film 11a, and a hard coating layer 11b for protecting this plastic film 11a.

A plastic film for instance of polyethylene terephthalate (PET), polyethylene naphthalate, polymethyl metaacrylate, polycarbonate or amorphous polyolefin (APO) is satisfactory as the plastic film 11a.

The hard coating layer is formed of silicon resin or epoxy resin, etc.

The plastic film 11a has a thickness for instance of 188 micrometers. The hard coating layer 11b has a thickness for example of 6 micrometers.

An adhesion layer 12 as shown in Fig. 1 is formed on the base 11 configured in this way. This adhesion layer 12 is formed of silicon (Si). The thickness of the adhesion layer 12 is for instance, from 1 to 10 nanometers and preferably has a thickness within a range from 1 to 5 nanometers.

An adhesion layer is formed from silicon (Si) in a thickness of two nanometers in the dichroic filter 10 of this embodiment as shown in Fig. 1.

Even if the thickness of the adhesion layer 12 formed from silicon (Si) is thin, the adhesion is satisfactory and further, the optical characteristics of the dichroic filter 10 are also satisfactory.

The thin optical film 13 shown in Fig. 1 is adhered to the base by the adhesion layer 12. When the thin optical film 13 is the dichroic filter 10, optical film layers totaling 21 layers are formed by alternating high refraction layers made for instance from niobium oxide ($Nb_2O_3$) and low refraction layers made from silicon dioxide ($SiO_2$).

In this way, even when formed in 21 layers, the adhesion properties of the adhesion layer 12 made from silicon (Si) are sufficient and the thin optical film 13 did not peel.

Niobium oxide ($Nb_2O_3$) was utilized as the high refraction layer in Fig. 1, however titanium oxide, tantalum oxide, indium tin oxide (ITO), tin oxide or cerium oxide may also be used.

When forming the optical thin film 13 as an anti-reflective film rather than the dichroic filter 10, an optical thin film layer of silicon formed for example in four to eight layers may be utilized.

When forming the optical thin film 13 as a high reflection mirror and utilizing for example niobium oxide (n = 2.4 high refraction material H) and silicon dioxide (n = 1.46, high refraction material L); the reflection rate for 13 layers comprised of a substrate (base)/adhesion layer/ (H/2 • L • H/2) • 6 is 99 percent or more . The L and the H at this time are $\lambda/4$ of the optical thin film.

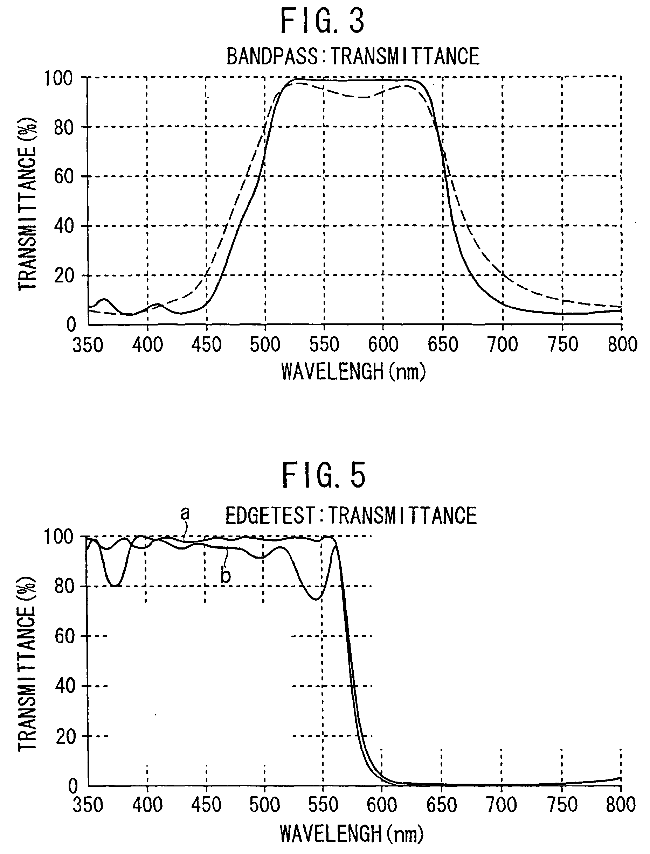

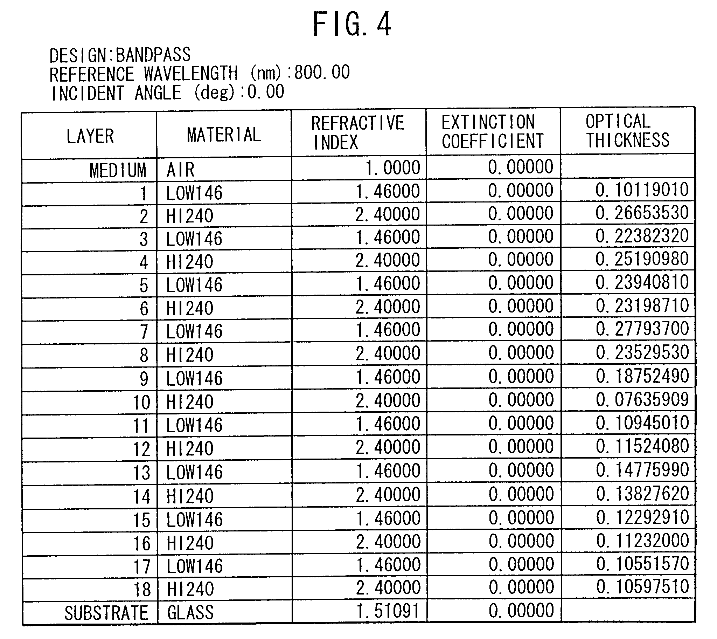

When forming the optical thin film 13 as a band filter, and utilizing 18 layers of substrate (base)/adhesion layer/ (H/4 • L/2 • H/4) • 4 (L/2 • L • H • L/2) • 4 and set for a design wavelength of 800 nanometers, then a satisfactory band filter can be obtained for 525 nanometers through 625 nanometers as shown by the solid and dashed lines in Fig. 3. This type of band filter when optimized is shown in Fig. 4.

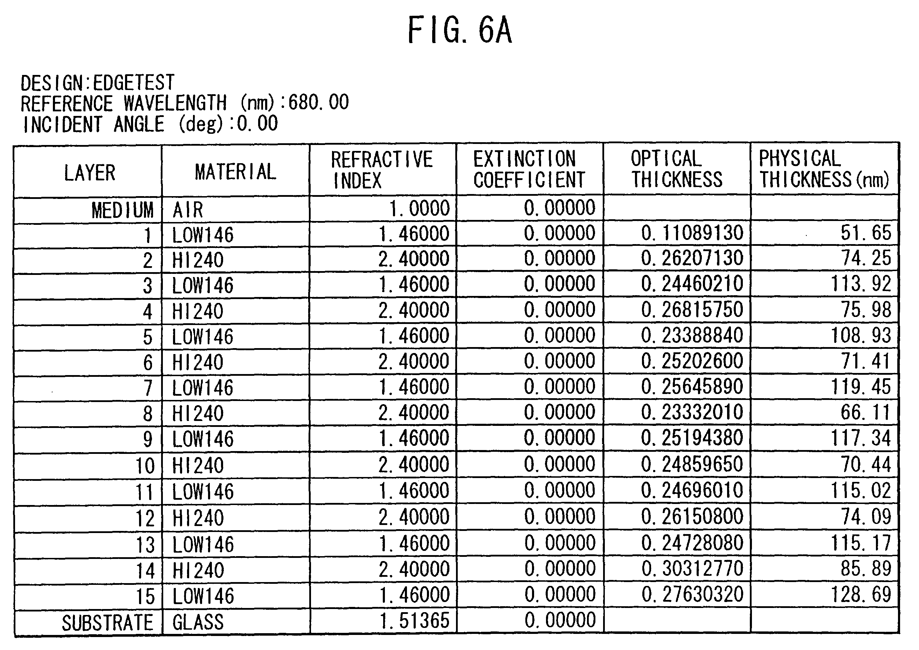

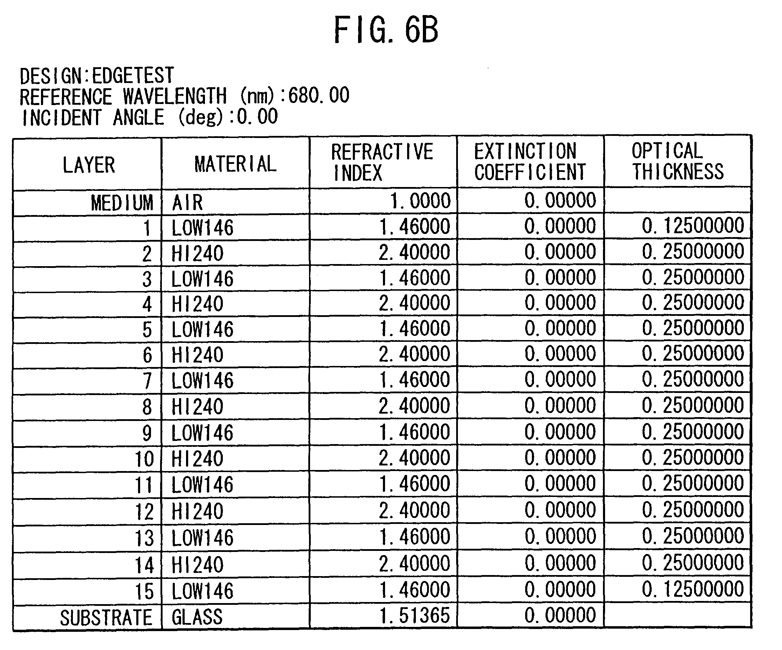

When forming the optical thin film 13 as an edge filter, and utilizing 15 layers of substrate (base)/adhesion layer/ (L/2 • H • L/2) • 7 , and set for a design wavelength of 680 nanometers, an edge filter for blocking the band from 600 nanometers to 750 nanometers, and having a transmittance of 400 nanometers to 550 nanometers in the optical thin films can be obtained as shown by a and b in Fig. 5. The edge filter of a and b in Fig. 5, when optimized is shown in Fig. 6.

The optical thin film layers were formed on each other in this way from layer 9 through layer 15, and even when the optical thin film layers were adhered with adhesion layer 12 of silicon (Si) formed on the base, no peeling from the base 11 was observed.

In the dichroic filter 10 of the embodiment of this invention as described above, the adhesion of the optical thin film 13 made from the 21 layers, with the base 11 as shown in Fig. 1 was greatly improved. Hereafter, the results of the peeling test performed on the dichroic filter 10 are shown.

Dichroic filter peeling test

(Test contents) Adhesive tape (scotch tape, etc.) was attached to the surface of the dichroic filter 10, and no peeling of the optical thin film 13 from the base 11 was observed, even if the adhesive tape was pulled up perpendicular to the surface of the dichroic filter 10.

The method and the manufacturing device for manufacturing the above described dichroic filter 10 are described next.

A drawing showing the optical thin film forming device 20 constituting the manufacturing device for optical components of the embodiment of this invention is shown in Fig. 2.

The optical thin film forming device 20 contains a cabinet 21 isolating the outside atmosphere and the internal atmosphere. A turbo pump 31 to maintain the vacuum inside the cabinet 21 is installed along with a moisture removal means not shown in the drawing.

A roll 24 constituting the first holding section for unrolling the base 11 is installed inside the cabinet 21.

The guide rolls 25a, 25b, are installed near the roll 24 for guiding the base 11 unrolled from the roll 24, in the RF etch installed in the cabinet 21.

The RF etch 28 is for high frequency (radio frequency) plasma etching, and forms a fine surface by etching the surface of the plastic base 11 by utilizing plasma in an atmosphere of argon or nitrogen.

The optical thin film forming device 20 contains a cooling drum 27 as shown in Fig. 2. This cooling drum 27 suppresses a rise in temperature in the base 11. The guide rolls 25c, 25e are installed as shown in Fig. 2 to guide the base 11 to the cooling drum 27.

An Nb sputter 22 constituting the metal target for sputtering niobium (Nb) onto the base 11, is installed in the cabinet 21 in a position equivalent to the left side of the cooling drum in Fig. 2. Further, an Si sputter 23 constituting the metal target for sputtering the silicon (Si) onto the base 11 by alternating current or direct current, is installed in the cabinet 21 in a position equivalent to the right side of the cooling drum in Fig. 2.

A gas supply valve 29 is installed on the upper side of the cabinet 21 for the sputter 23 in the figure. During sputtering of niobium (Nb) or silicon (Si) onto the base 11 by the Nb sputter 22 or the Si sputter 23, the gas supply valve 29 is used for input of an inert gas such as argon or nitrogen, or a reactive gas to perform sputtering.

In other words, when the thin optical film to be sputtered is for example made from silicon dioxide ($SiO_2$) or niobium pentoxide ($Nb_2O_5$) as shown in Fig. 1, then optical thin films of silicon dioxide ($SiO_2$) and niobium pentoxide ($Nb_2O_5$) can be formed, by supplying oxygen along as well as argon from the gas supply valve 29, along with utilizing niobium (Nb) and silicon (Si) respectively for the Nb sputter 22 and the Si sputter 23.

A transmittance monitor 30 is installed above the gas supply valve 29 of Fig. 2, between the cooling drum 27 and winding roll 26 constituting the second holding section for winding the base 11. A guide roll 25f is also installed to guide the base 11 from the cooling drum 27 to the transmittance monitor 30 and the winding roll 26.

The transmittance monitor 30 monitors for instance, whether or not the thickness of the optical film being formed on the base 11 satisfies the transmittance rate characteristics calculated before hand in the design, and displays those results on an external display not shown in the drawing.

In Fig. 2, the above described winding roll 26 is installed above the transmittance rate monitor 30 and the base 11 is ultimately wound on this winding roll 26.

To prevent oxidation of the silicon by residual moisture within the cabinet 21, during sputtering of the adhesion layer 12, preferably, a means to remove moisture (not shown in the drawing) is connected externally or within the cabinet 21.

The optical thin film forming device 20 of this embodiment was configured as described above however, the manufacturing method for optical components utilizing the optical thin film forming device 20 is described next using the dichroic filter 10 as an example.

First of all, a flexible band-shaped plastic film 11a having a thickness for example of 188 micrometers and made for instance from polyethylene terephthalate (PET) is utilized, and a hard coating layer 11b of silicon resin is formed in a thickness for instance of six micrometers on this plastic film 11a as shown in Fig. 1 to form the base 11.

The end of the base 11 formed in this way is a roll shape, is supplied so as to engage with the winding roll 26 installed as shown in Fig. 2. The base 11 installed in this way, passes from the roll 24, along the guide rolls 25a, 25b, 25c, around the cooling drum 27, along the guide rolls 25e, 25f and is wound along the winding roll 26. The drive speed of the base 11 when forming as film on the adhesion layer 12 is for example 2.5 meters per minute. The drive speed when forming the optical thin film layer 13 is for example, 0.2 meters per minute.

An adhesion layer made from silicon (Si) is formed as a film on the base 11 formed as described above. More specifically, argon gas is supplied from the supply valve 29 in the cabinet 21 to create an argon gas atmosphere within the cabinet 21. The flow rate of argon gas at this time is for example, 200 sccm.

The thin silicon (Si) film is formed in a thickness of 2 nanometers on the base 11 while in this state, utilizing the Si sputter 23 in Fig. 2. The electrical power of the sputter at this time is for example 0.8 kilowatts.

When forming of the silicon (Si) film on the base 11 is finished, the base 11 formed with the silicon (Si) film is removed from the winding roll 26, and attached to the roll 24.

One end of the base 11 formed with the film of silicon (Si) attached in this way, is installed on the winding roll 26 as described above.

Next, the silicon dioxide ($SiO_2$) film is formed as shown in Fig. 1. More specifically, the turbo pump 31 functioning as the vacuum exhaust device attached to the cabinet 21, exhausts the interior of the cabinet, and injects oxygen and argon gas from the gas supply valve 29, to create an oxygen/argon atmosphere inside the cabinet 21.

Afterwards, a thin film of silicon dioxide ($SiO_2$) is formed to a thickness for of 151.4 nanometers by utilizing the Si sputter 22 shown in Fig. 2.

After forming of the thin film of silicon dioxide ($SiO_2$) is complete, the base 11 formed with a film of silicon (Si) and silicon dioxide ($SiO_2$) is installed on the roll 24, the atmosphere inside the cabinet 21 is made into an oxygen/argon atmosphere by utilizing the gas supply valve 29, and a thin film of niobium pentoxide ($Nb_2O_5$) is formed in a thickness for example of 95.9 nanometers by utilizing the Nb sputter 22 shown in Fig. 2.

In this way, a thin film for example of 21 layers of silicon dioxide ($SiO_2$) thin film and niobium pentoxide ($Nb_2O_5$) thin film are formed just as shown in Fig. 1, to complete the optical thin film layer 13.

The thickness of each thin film is for example as shown in Fig. 1. However, among these formed thin films, the silicon dioxide ($SiO_2$) layer is a low transmittance layer, and the niobium pentoxide ($Nb_2O_5$) layer is a high transmittance layer.

In this way, with a low transmittance layer of silicon dioxide ($SiO_2$) and a high transmittance layer of niobium pentoxide ($Nb_2O_5$) forming one set, a lamination of 10 sets for example is formed to manufacture the dichroic filter 10 as shown in Fig. 1.

In the dichroic filter manufactured as described above, even with the 21 layers formed onto the base 11, there was no peeling of the optical thin film layer 13 from the base 11 just the same as shown in the test results. The silicon (Si) layer constituting the adhesion layer had a thickness of two nanometers sufficient to fulfill the functions of an adhesion layer. Therefore, no adverse effects on optical characteristics of the optical thin film layer 13 formed onto the adhesion layer occurred, and a satisfactory dichroic filter could be manufactured.

This embodiment utilized silicon dioxide ($SiO_2$) as the low transmittance layer, however magnesium fluoride may be used instead of silicon dioxide ($SiO_2$). In such cases, vapor deposition is generally performed with an electron beam, using magnesium as the material.

**Claims**

1. An optical component having an adhesion layer comprised of silicon on a transparent or semitransparent base, and an optical thin film layer comprised of a plurality of said adhesion layers.

2. An optical component according to claim 1, wherein said base is a flexible base.

3. An optical component according to claim 1, wherein said base is organic matter.

4. An optical component according to claim 2, wherein said flexible base is a plastic film.

5. An optical component according to claim 1, wherein said base is any of polyethylene terephthalate, polyethylene naphthalate, polymethyl metaacrylate, polycarbonate or amorphous polyolefin.

6. An optical component according to claim 1, wherein said base is a plastic film having a hard coating layer on the surface.

7. An optical component according to claim 1, wherein said adhesion layer has a thickness of approximately 1 nanometer to 10 nanometers.

8. An optical component according to claim 1, wherein said adhesion layer has a thickness of approximately 1 nanometer to 5 nanometers.

9. An optical component according to claim 1, wherein said optical component is an anti-reflection mirror, a highly reflective mirror or a filter.

10. An optical component according to claim 9, wherein said filter is an edge filter, a band filter or a dichroic filter.

11. An optical component according to claim 1, wherein the number of the films of the multilayer film containing said adhesion layers is between 4 and 8 and said optical component has an anti-reflective function.

12. An optical component according to claim 1, wherein the number of the films of the multilayer film containing said adhesion layers is 9 or more.

13. An optical component according to claim 1, wherein said adhesion layer is formed on said base and a low refraction layer covered by a high refraction layer is formed on said adhesion layer, or a high refraction layer covered by a low refraction layer is formed on said adhesion layer in the four sets or more of layers stacked.

14. An optical component according to claim 1, wherein said adhesion layer is formed on said base, and the outermost layer of the multilayer structure is a low refraction layer in the four sets or more of layers stacked in the order of low refraction layer on the base, and high refraction layer covering the low refraction layer.

15. An optical component according to claim 1, wherein said adhesion layer is formed on said base, and the outermost layer of the multilayer structure is a high refraction layer in the four sets or more of layers stacked in the order of high refraction layer on the base, and low refraction layer covering the high refraction layer.

16. An optical component according to claim 15, wherein said low refraction layer is comprised of silicon oxide or magnesium fluoride.

17. An optical component according to claim 15, wherein said high refraction layer is comprised of titanium oxide, tantalum oxide, niobium oxide, indium tin oxide, tin oxide or cerium oxide.

18. A manufacturing method for an optical component, wherein said manufacturing method comprises a process for forming an adhesion layer by sputtering, utilizing the silicon metal target on the base and, a process to form an optical thin film comprised of a plurality of layers on the adhesion layer, by utilizing the target of the optical thin film material.

19. A manufacturing method for an optical component according to claim 18, wherein in said manufacturing method, argon or nitrogen is supplied to the film forming chamber during said direct current or alternating current sputtering, and said adhesion layer is formed.

20. A manufacturing method for an optical component according to claim 19, wherein in said manufacturing method, said adhesion layer is formed while controlling the introduction quantity of said argon or said nitrogen.

21. A manufacturing method for an optical component according to claim 21, wherein in said manufacturing method, the input quantity of said argon or said nitrogen is regulated and an adhesion layer formed while monitoring the transmittance rate of light in this adhesion layer after forming said adhesion layer.

22. An optical component manufacturing device for an optical component, wherein said manufacturing device comprises:

a first holding part for holding a base;
a second holding part for receiving said base sent from said first holding part; and
a metal target of silicon for sputtering said base also placed between said first holding part and said second holding part.

# FIG. 1

| | |
|---|---|
| $SiO_2$ | 35.0nm |
| $Nb_2O_5$ | 94.8nm |
| $SiO_2$ | 112.4nm |
| $Nb_2O_5$ | 81.7nm |
| $SiO_2$ | 134.0nm |
| $Nb_2O_5$ | 77.3nm |
| $SiO_2$ | 126.1nm |
| $Nb_2O_5$ | 78.1nm |
| $SiO_2$ | 129.1nm |
| $Nb_2O_5$ | 77.1nm |
| $SiO_2$ | 126.3nm |
| $Nb_2O_5$ | 77.3nm |
| $SiO_2$ | 128.8nm |
| $Nb_2O_5$ | 78.1nm |
| $SiO_2$ | 127.1nm |
| $Nb_2O_5$ | 78.1nm |
| $SiO_2$ | 132.0nm |
| $Nb_2O_5$ | 82.6nm |
| $SiO_2$ | 128.8nm |
| $Nb_2O_5$ | 95.9nm |
| $SiO_2$ | 151.4nm |

10

13

| | |
|---|---|
| Si | 2nm |

~12

| | |
|---|---|
| 11b~ | HARD COATING 6$\mu$m |
| 11a~ | PET 188$\mu$m |

11

# FIG. 2

# FIG. 3
## BANDPASS : TRANSMITTANCE

# FIG. 5
## EDGETEST : TRANSMITTANCE

# FIG. 4

EP 1 092 991 A2

DESIGN:BANDPASS
REFERENCE WAVELENGTH (nm):800.00
INCIDENT ANGLE (deg):0.00

| LAYER | MATERIAL | REFRACTIVE INDEX | EXTINCTION COEFFICIENT | OPTICAL THICKNESS |
|---|---|---|---|---|
| MEDIUM | AIR | 1.0000 | 0.00000 | |
| 1 | LOW146 | 1.46000 | 0.00000 | 0.10119010 |
| 2 | HI240 | 2.40000 | 0.00000 | 0.26653530 |
| 3 | LOW146 | 1.46000 | 0.00000 | 0.22382320 |
| 4 | HI240 | 2.40000 | 0.00000 | 0.25190980 |
| 5 | LOW146 | 1.46000 | 0.00000 | 0.23940810 |
| 6 | HI240 | 2.40000 | 0.00000 | 0.23198710 |
| 7 | LOW146 | 1.46000 | 0.00000 | 0.27793700 |
| 8 | HI240 | 2.40000 | 0.00000 | 0.23529530 |
| 9 | LOW146 | 1.46000 | 0.00000 | 0.18752490 |
| 10 | HI240 | 2.40000 | 0.00000 | 0.07635909 |
| 11 | LOW146 | 1.46000 | 0.00000 | 0.10945010 |
| 12 | HI240 | 2.40000 | 0.00000 | 0.11524080 |
| 13 | LOW146 | 1.46000 | 0.00000 | 0.14775990 |
| 14 | HI240 | 2.40000 | 0.00000 | 0.13827620 |
| 15 | LOW146 | 1.46000 | 0.00000 | 0.12292910 |
| 16 | HI240 | 2.40000 | 0.00000 | 0.11232000 |
| 17 | LOW146 | 1.46000 | 0.00000 | 0.10551570 |
| 18 | HI240 | 2.40000 | 0.00000 | 0.10597510 |
| SUBSTRATE | GLASS | 1.51091 | 0.00000 | |

# FIG. 6A

DESIGN:EDGETEST
REFERENCE WAVELENGTH (nm):680.00
INCIDENT ANGLE (deg):0.00

| LAYER | MATERIAL | REFRACTIVE INDEX | EXTINCTION COEFFICIENT | OPTICAL THICKNESS | PHYSICAL THICKNESS (nm) |
|---|---|---|---|---|---|
| MEDIUM | AIR | 1.0000 | 0.00000 | | |
| 1 | LOW146 | 1.46000 | 0.00000 | 0.11089130 | 51.65 |
| 2 | HI240 | 2.40000 | 0.00000 | 0.26207130 | 74.25 |
| 3 | LOW146 | 1.46000 | 0.00000 | 0.24460210 | 113.92 |
| 4 | HI240 | 2.40000 | 0.00000 | 0.26815750 | 75.98 |
| 5 | LOW146 | 1.46000 | 0.00000 | 0.23388840 | 108.93 |
| 6 | HI240 | 2.40000 | 0.00000 | 0.25202600 | 71.41 |
| 7 | LOW146 | 1.46000 | 0.00000 | 0.25645890 | 119.45 |
| 8 | HI240 | 2.40000 | 0.00000 | 0.23332010 | 66.11 |
| 9 | LOW146 | 1.46000 | 0.00000 | 0.25194380 | 117.34 |
| 10 | HI240 | 2.40000 | 0.00000 | 0.24859650 | 70.44 |
| 11 | LOW146 | 1.46000 | 0.00000 | 0.24696010 | 115.02 |
| 12 | HI240 | 2.40000 | 0.00000 | 0.26150800 | 74.09 |
| 13 | LOW146 | 1.46000 | 0.00000 | 0.24728080 | 115.17 |
| 14 | HI240 | 2.40000 | 0.00000 | 0.30312770 | 85.89 |
| 15 | LOW146 | 1.46000 | 0.00000 | 0.27630320 | 128.69 |
| SUBSTRATE | GLASS | 1.51365 | 0.00000 | | |

EP 1 092 991 A2

# FIG. 6B

DESIGN:EDGETEST
REFERENCE WAVELENGTH (nm):680.00
INCIDENT ANGLE (deg):0.00

| LAYER | MATERIAL | REFRACTIVE INDEX | EXTINCTION COEFFICIENT | OPTICAL THICKNESS |
|---|---|---|---|---|
| MEDIUM | AIR | 1.0000 | 0.00000 | |
| 1 | LOW146 | 1.46000 | 0.00000 | 0.12500000 |
| 2 | HI240 | 2.40000 | 0.00000 | 0.25000000 |
| 3 | LOW146 | 1.46000 | 0.00000 | 0.25000000 |
| 4 | HI240 | 2.40000 | 0.00000 | 0.25000000 |
| 5 | LOW146 | 1.46000 | 0.00000 | 0.25000000 |
| 6 | HI240 | 2.40000 | 0.00000 | 0.25000000 |
| 7 | LOW146 | 1.46000 | 0.00000 | 0.25000000 |
| 8 | HI240 | 2.40000 | 0.00000 | 0.25000000 |
| 9 | LOW146 | 1.46000 | 0.00000 | 0.25000000 |
| 10 | HI240 | 2.40000 | 0.00000 | 0.25000000 |
| 11 | LOW146 | 1.46000 | 0.00000 | 0.25000000 |
| 12 | HI240 | 2.40000 | 0.00000 | 0.25000000 |
| 13 | LOW146 | 1.46000 | 0.00000 | 0.25000000 |
| 14 | HI240 | 2.40000 | 0.00000 | 0.25000000 |
| 15 | LOW146 | 1.46000 | 0.00000 | 0.12500000 |
| SUBSTRATE | GLASS | 1.51365 | 0.00000 | |

EP 1 092 991 A2